# FASCICULE DE BREVET EUROPEEN

(11) **EP 1 329 398 B1**
(45) Date de publication et mention de la délivrance du brevet: **27.10.2004**
(21) Numéro de dépôt: 03358001.0
(22) Date de dépôt: 08.01.2003
(51) Int. Cl.: B65G 1/137, B65G 1/04, G07F 11/06

(54) **Procédé et installation automatisée de stockage et de distribution d'objects ou articles divers**
Verfahren und Anlage zur automatischen Lagerung und Verteilung von verschiedenen Stückgütern oder Gegenständen
Method and automated storage and distribution installation for various objects or articles

(30) Priorité: 11.01.2002 FR 0200316
(43) Date de publication de la demande: 23.07.2003
(73) Titulaire: B Plus Development (Société Anonyme), 13821 La Penne sur Huveaune (FR)
(72) Inventeur: Durand, Claude, 13420 Gemenos (FR); Dotte, Emmanuel, 13090 Aix en Provence (FR); Casanova, Robert, 13008 Marseille (FR); Accardo, Jean-Luc, 13007 Marseille (FR)
(74) Mandataire: Marek, Pierre

(56) Documents cités:
- DE-U- 20 011 661
- FR-A- 2 399 958
- US-A- 3 403 799
- US-A- 4 546 901
- US-A- 5 511 646

## Description

La présente invention est relative à un procédé et à une installation automatisée de stockage et de distribution d'objets ou articles de tailles et de formes diverses. Le domaine de l'invention est celui des magasins à distribution automatique et des installations de stockage permettant la sélection et le prélèvement automatique d'objets ou articles divers tels que, par exemple, produits alimentaires, produits de droguerie, articles de bricolage, parapharmacie, multimédia, jouets, etc.

On connaît (US-3 126 124, US-3 788 516, EP-0 779 605, BE-654 952) les distributeurs automatiques fondés sur des solutions permettant la libération de l'article commandé et sa chute par gravité dans un orifice de livraison. De tels systèmes, basés sur l'utilisation de spirales, de poussoirs, de plateaux basculants, de cames ou autres automatismes présentent plusieurs inconvénients :
- ils sont limités à la distribution d'articles peu fragiles, de forme et de dimensions bien définies.
- le nombre de références en stocks n'excède pas quelques dizaines.
- la livraison simultanée de plusieurs articles n'est pas possible.

On connaît aussi (WO-88/03 506, WO-88/05 292) les systèmes de stockage automatisés de type transstockeurs. De tels systèmes nécessitent généralement l'utilisation de contenants intermédiaires (plateaux, bacs, tiroirs, cassettes, palettes...) de format spécifique dans ou sur lesquels sont stockés les objets. Dans le cas contraire, ces systèmes ne peuvent traiter que quelques formats différents d'objets.

On connaît (EP-0.779.605 A2, EP-0 991 037), les systèmes de stockage et de prélèvement automatique, basés sur le stockage des objets dans des racks inclinés ou verticaux et le prélèvement de l'article en bas de pile. Ces systèmes sont réservés à des objets légers, non déformables et peu fragiles. Les objets doivent en effet supporter le poids d'une pile d'objets identiques et une chute dans un bac ou sur une bande transporteuse.

On connaît également (EP-0.885.817 A1, FR-2.385.620, FR-2 378 697), les magasins robotisés basés sur le principe du stockage des articles dans des rangées munies de poussoirs actionnés par un dispositif de transport permettant d'acheminer l'article commandé vers un orifice de livraison. De tels systèmes présentent également plusieurs inconvénients :
- ils ne livrent qu'un article à la fois, ce qui conduit à un délai de livraison important lors des commandes de plusieurs articles et affecte leur rentabilité ;
- le rechargement du stock nécessite l'arrêt du magasin et se traduit par une perte nette d'exploitation ;
- le principe d'extraction, basé sur la poussée d'une rangée d'articles mis en oeuvre dans ces systèmes, n'est pas adapté à certains formats d'objets comme les sachets souples ou les blisters, qui nécessitent un mécanisme supplémentaire pour être traités.

On connaît également (EP-0.026.754 A1, EP-1 004 996), les dispositifs de stockage automatisé dans lesquels les objets sont stockés sur des plateaux équipés de bandes transporteuses. L'utilisation d'organes de commande individuels et autonomes pour la motorisation des bandes lors du prélèvement des objets conduit à un coût élevé et une faible modularité de la zone de stockage. Les objets doivent en outre supporter une chute dans un bac ou sur une bande transporteuse. On connaît enfin (DE-U-20011661), une installation automatisée de stockage et de distribution d'articles divers selon le préambule de la revendication 2, et une procédé de stockage selon le préambule de la revendication 1.

Les problèmes posés consistent donc notamment : à procurer un système de stockage et de distribution automatique d'objets à même de traiter un grand nombre d'articles de nature, de formes, et de tailles variées ; à permettre la livraison en simultané de plusieurs de ces objets, à permettre le rechargement du stock d'objets, en cours de fonctionnement du magasin ; à simplifier la construction, le fonctionnement et la maintenance des installations, et à permettre de réaliser ces dernières avec des configurations et des encombrements facilement adaptables en fonction des contraintes d'implantation.

Le procédé de l'invention s'applique à une installation de stockage et de distribution automatique du genre comportant un ensemble de rayonnages comprenant une pluralité d'étagères ou plateaux pour le stockage des articles, un moyen de réception et de transport piloté par un système de contrôle et de commande susceptible de se déplacer devant cet ensemble de rayonnages, et de se positionner devant le plateau supportant le stock d'articles correspondant à l'objet choisi, pour réceptionner au moins l'un de ces articles extrait dudit stock par un système d'extraction approprié et le transporter jusqu'à un poste de livraison, et une interface utilisateur comprenant des moyens d'affichage et de sélection de la nature des objets choisis par l'utilisateur lors de sa commande, éventuellement équipée de moyens de paiement automatique du prix des objets commandés dans le cas d'une utilisation du système à des fins commerciales.

Selon une première disposition caractéristique du procédé et de l'installation de l'invention, les objets ou articles d'une même référence sont stockés les uns à la suite des autres, sur le brin supérieur d'une ou plusieurs bandes de transport sans fin montées folles, cette ou ces bande(s) de transport constituant la surface réceptrice de l'une des différentes travées d'un rayonnage de stockage, et la motorisation sélective de cette ou ces bande(s) de transport, entraînant le déplacement des articles qu'elles supportent en direction d'un point de prélèvement, est obtenue par l'application de galets moteurs montés sur un extracteur mobile se déplaçant devant ledit rayonnage de stockage, et entraînant par friction la ou les bande(s) de transport de la travée supportant les articles choisis ou commandés, de sorte à permettre le transfert du premier de ces articles sur une surface réceptrice dudit extracteur.

Ce procédé procure plusieurs avantages :
- il permet de stocker et de distribuer des articles fragiles ou déformables ;
- le rechargement du stock d'objets peut être effectué sans interrompre le fonctionnement de l'installation, ce qui évite des pertes d'exploitation pendant les opérations de reconstitution des réserves ;
- la mise en mouvement des bandes de transport sur lesquelles sont stockés les objets est assurée par le ou les extracteur(s), ce qui limite le coût et la complexité des plateaux de stockage ;
- le nombre de rayonnages de stockage et leur disposition sur une ou deux rangées est facilement modulable en fonction du nombre et du volume des objets à distribuer et de la configuration du local dans lequel est implanté le système.

Selon une autre disposition caractéristique du procédé et de l'installation de l'invention, la surface réceptrice de chaque plateau de stockage est constituée par une pluralité de bandes de transport sans fin étroites faiblement espacées, montées folles individuellement, et l'ossature métallique disposée sous le brin supérieur desdites bandes est pourvue de rangées d'ouvertures s'étendant parallèlement à ces dernières et au-dessous des espaces ménagés entre celles-ci, pour le montage amovible de séparations verticales permettant la division de chaque plateau en plusieurs travées de largeurs égales ou différentes et dont les surfaces réceptrices sont constituées d'une ou plusieurs bandes de transport.

Selon une autre disposition caractéristique du procédé et de l'installation de l'invention, les montants et les bords latéraux de la structure métallique des plateaux sont agencés de manière complémentaire pour permettre la fixation amovible et à différentes altitudes desdits plateaux sur lesdits montants.

Grâce à ces dispositions caractéristiques, la configuration des travées peut être aisément adaptée à la largeur et à la hauteur des articles à distribuer et cette configuration peut être facilement modifiée si nécessaire en déplaçant les séparations et/ou les plateaux. Le nombre de rayonnages de stockage et leur disposition sur une ou plusieurs rangées est modulable en fonction du nombre et du volume des objets à distribuer et de la configuration du local dans lequel est implanté le système.

Selon une autre disposition caractéristique du procédé et de l'installation selon l'invention, l'extracteur dépose les objets prélevés, lors d'une commande de plusieurs articles, sur un tapis d'accumulation avec lequel il forme un ensemble mobile susceptible de se déplacer devant les rayonnages.

Le stockage temporaire des objets après leur prélèvement selon cette disposition avantageuse, permet, lors d'une commande de plusieurs objets, de livrer l'ensemble des objets en simultané après les avoir extraits successivement. Ainsi, la durée globale de l'opération de distribution est réduite, et le système est rapidement disponible pour une nouvelle commande.

En outre, le transfert des objets de leur emplacement de stockage à l'orifice de livraison est réalisé par convoyage sur des tapis de transport horizontaux, ce qui permet le traitement d'objets de natures, de formes, et de tailles variées, évite les chutes d'objets et limite les contraintes mécaniques subies par les objets.

Les buts, caractéristiques et avantages ci-dessus, et d'autres encore, ressortiront mieux de la description qui suit et des dessins annexés dans lesquels
La figure 1 est une vue schématique en perspective illustrant une forme de réalisation possible de l'invention.
La figure 2 est une vue schématique d'un rayonnage constitué de plusieurs plateaux de stockage des objets selon l'invention.
La figure 3 montre le détail d'un plateau de stockage selon l'invention.
La figure 4 illustre un détail de l'arrière d'un rayonnage selon l'invention.
Les figures 5 et 6 représentent, vues de dessus, deux formes d'agencement possibles de l'installation selon l'invention, mettant en évidence la modularité de la zone de stockage des objets.
La figure 7 représente un tapis assurant le stockage temporaire des objets prélevés associé à deux extracteurs selon l'invention
Les figures 8 à 12 illustrent, schématiquement, le fonctionnement d'un extracteur dans les différentes phases du prélèvement d'un objet.

On se reporte auxdits dessins pour décrire des exemples avantageux, bien que nullement limitatifs, de mise en oeuvre du procédé et de réalisation de l'installation selon l'invention.

Dans l'exposé qui suit, on précise que :
- le mot "référence" désigne une catégorie d'objets identiques
- le mot "article" désigne un exemplaire d'objets d'une certaine référence
- le mot "rayonnage" désigne un ensemble constitué d'une pluralité de plateaux superposés soutenus par une structure porteuse, par exemple constituée par des montants ;
- le mot "plateau" désigne l'ensemble des éléments constitutifs de chaque étagère des rayonnages, chaque plateau pouvant recevoir plusieurs références d'articles ;
- le terme "travée" désigne chaque division d'un plateau appelée à recevoir plusieurs articles d'une même référence ;
- le mot "rangée" désigne un ensemble de rayonnages disposés en alignement.

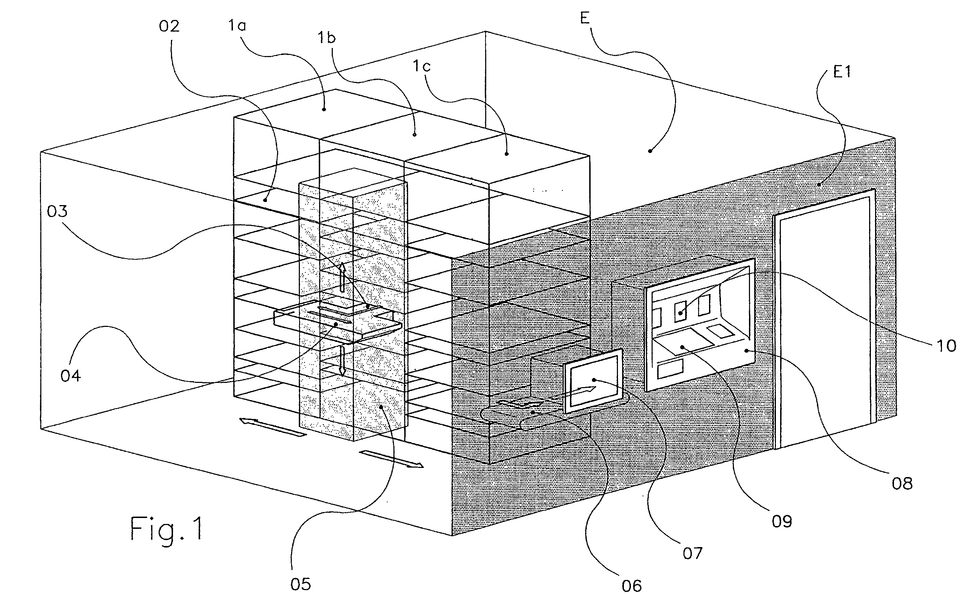

La figure 1 représente une vue en perspective d'une forme de réalisation possible de l'invention dans laquelle la zone de stockage est constituée de trois rayonnages accolés sur une seule rangée. Sur cette figure, sont schématisés les principaux éléments constitutifs de l'installation de l'invention, à savoir les rayonnages 1a, 1b, 1c, constitués des plateaux de stockage 2, l'extracteur 3 des objets et le tapis d'accumulation 4 permettant le stockage temporaire des objets extraits avant leur livraison, le robot 5 qui assure le déplacement de l'ensemble (extracteur 3 + tapis d'accumulation 4), le tapis de livraison 6 qui achemine les objets vers l'orifice de livraison 7, et l'interface utilisateur 8 équipée d'un écran de visualisation et de saisie 9 et des périphériques de paiement automatique 10. Cette installation est éventuellement renfermée dans une enceinte E dans la paroi frontale E1 de laquelle sont disposés l'orifice de livraison 7 et l'interface utilisateur 8.

Le fonctionnement d'une telle installation se conçoit aisément.

L'utilisateur constitue et valide sa commande au moyen de l'écran de visualisation et de saisie 9, qui est équipé d'une dalle tactile. Il sélectionne ses objets en navigant dans un catalogue virtuel dans lequel les objets en stock sont classés par familles. Des informations complémentaires (photos, caractéristiques, prix ...) peuvent être affichées lors de la sélection d'un objet. Lorsque l'utilisateur a validé sa commande, le système déstocke successivement chacun des objets commandés puis livre l'ensemble de la commande dans la zone de l'orifice de livraison 7.

Dans le cas d'une utilisation du système pour la distribution payante d'objets, le déstockage des objets est initié après la validation du paiement, et un ticket reprenant le détail et le prix des objets livrés est délivré au client. Plusieurs modes de paiement peuvent être utilisés (pièces, billets, porte monnaie électronique, carte bancaire ou privative).

L'utilisateur peut également passer une commande à distance, en se connectant sur un réseau informatique, par exemple du type internet ou intranet, relié au système et capable d'en interroger le stock. Un numéro de dossier est alors attribué à l'utilisateur et les objets qu'il a commandés lui sont réservés pendant une durée déterminée. Pour retirer sa commande, l'utilisateur rappelle sur l'écran de saisie et de validation 9 le numéro de dossier qui lui a été attribué à distance, puis effectue le paiement des objets commandés, ce qui déclenche le prélèvement des objets réservés et leur livraison dans le sas de livraison 7.

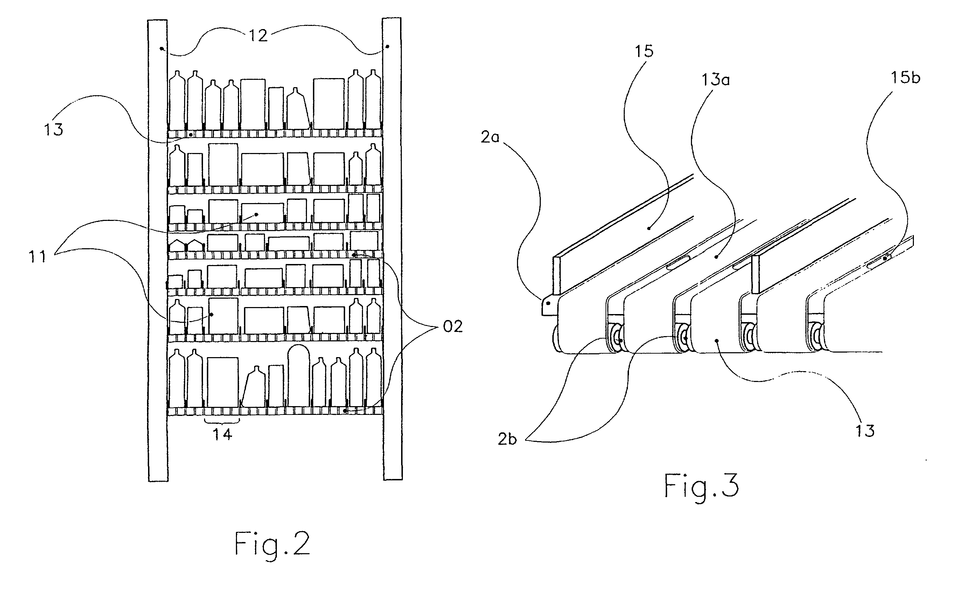

La figure 2 représente, en vue de face, un rayonnage 1 comprenant sept plateaux 2 soutenus, par exemple par quatre montants 12. Les montants verticaux 12 et les bords latéraux de l'ossature rigide 2a des plateaux 2, sont agencés de manière complémentaire pour permettre une fixation amovible, et à différentes hauteurs, desdits plateaux sur lesdits montants. Par exemple, les montants 1 sont munis d'ouvertures superposées faiblement espacées, tandis que les bords latéraux de l'ossature rigide 2a des plateaux 2 sont munis de pattes destinées à s'engager dans lesdites ouvertures. L'altitude des plateaux 2 est ainsi réglable, ainsi que le nombre de plateaux 2 par rayonnage 1, qui peut être choisi en fonction de la hauteur des objets 11.

Comme le montre la figure 3, chaque plateau 2 est constitué par une pluralité de bandes de transport sans fin 13 montées folles, individuellement, sur des poulies 2b installées aux extrémités avant et arrière de l'ossature rigide 2a des plateaux 2. Le brin supérieur horizontal ou approximativement horizontal 13a de ces bandes sans fin 13, constitue la surface sur laquelle reposent les objets stockés 11. Les bandes de transport 13 ont une largeur identique réduite (par exemple de l'ordre de 35 mm) et sont faiblement espacées (par exemple de l'ordre de 13 mm). Chaque plateau ainsi agencé présente, par exemple, une largeur de l'ordre de 120 cm et une profondeur de l'ordre de 80 cm.

L'ossature rigide 2a des plateaux 2 disposée entre les brins supérieur et inférieur des bandes sans fin 13 est pourvue d'ouvertures 15b alignées parallèlement auxdites bandes de transport 13 et accessibles entre les espaces séparant les brins supérieurs 13a de ces dernières. Chaque rayonnage comprend également des cloisons ou séparations 15 agencées pour pouvoir être positionnées verticalement entre les bandes de stockage et de transport 13. Le bord inférieur de ces séparations est, par exemple, muni de pattes (non représentées) ou éléments d'assemblage analogues destinés à s'engager dans les ouvertures 15b de l'ossature rigide 2a. Les plateaux 2 sont de la sorte divisés en plusieurs travées 14, ouvertes à l'avant et à l'arrière, une travée servant au stockage d'une pluralité d'objets d'une même référence. Une travée 14 comprend une ou plusieurs bandes de transport 13 en fonction de la largeur de l'objet 11 qui y est stocké. On comprend que la largeur des travées peut être rapidement et facilement modifiée, en fonction des besoins, par simple déplacement latéral des séparations amovibles 15.

Les objets traités par le procédé et l'installation de l'invention peuvent être de nature diverse : produits d'épicerie, de parapharmacie, pièces détachées automobile, jouets, produits multimédia, etc. Ces objets peuvent être de forme quelconque, voire déformables mais doivent cependant présenter une surface d'appui stable. Les objets sphériques ou les cylindres posés sur une génératrice sont exclus, sauf à être placés sur des supports ou socles perdus adéquats.

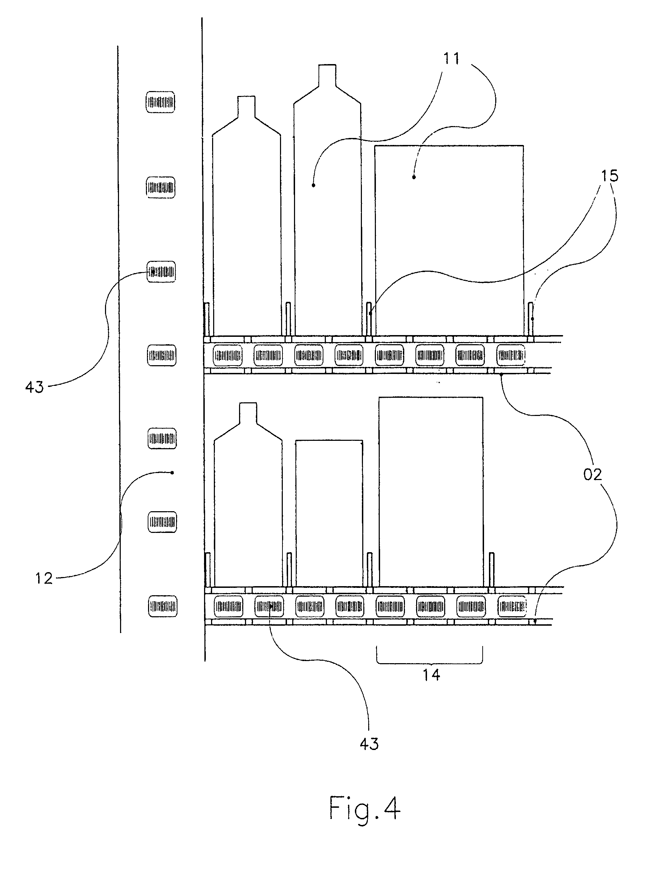

Plusieurs rayonnages 1 peuvent être accolés pour former un magasin de stockage modulable, suivant une ou deux rangées, voire plus de deux rangées. L'agencement des rayonnages et des travées 14 est enregistré dans le système de contrôle et de commande par l'intermédiaire d'un terminal de lecture de codes à barres portable. Comme illustré à la figure 4, des codes à barres 43 repèrent à cet effet chacune des bandes 13 des plateaux 2 ainsi que les altitudes de positionnement possible d'un plateau 2 sur un montant 12. Ces codes à barres 43 sont placés à l'arrière des rayonnages, du coté opposé à celui du prélèvement. Ainsi, lors des opérations de rechargement du stock et de modification de l'agencement du magasin, la mise à jour des données du système de contrôle et de commande est réalisée instantanément par l'opérateur à l'aide dudit terminal.

La profondeur importante des plateaux 2 associée au principe du rechargement des travées par l'arrière du rayonnage permettent le rechargement du magasin sans qu'il soit nécessaire d'interrompre le fonctionnement du système et les éventuels prélèvements d'articles en cours.

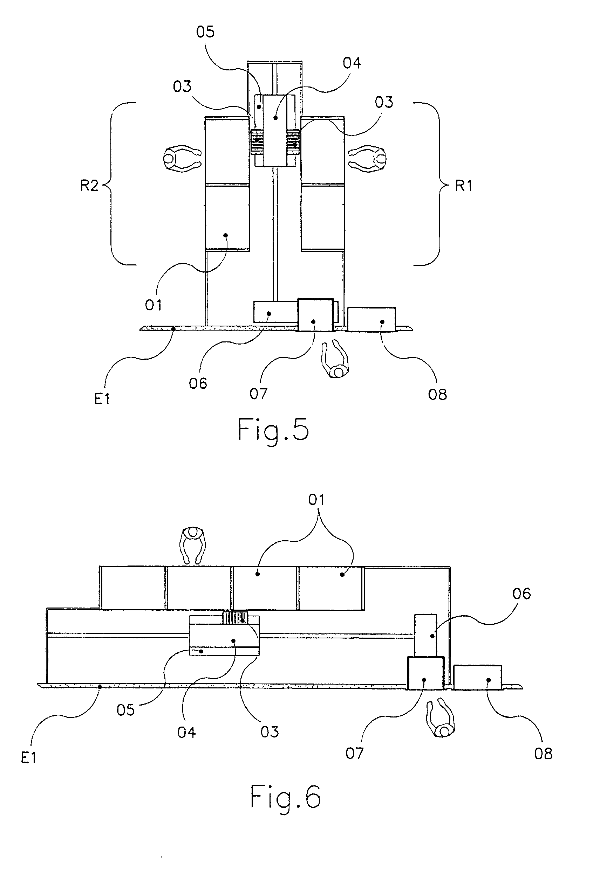

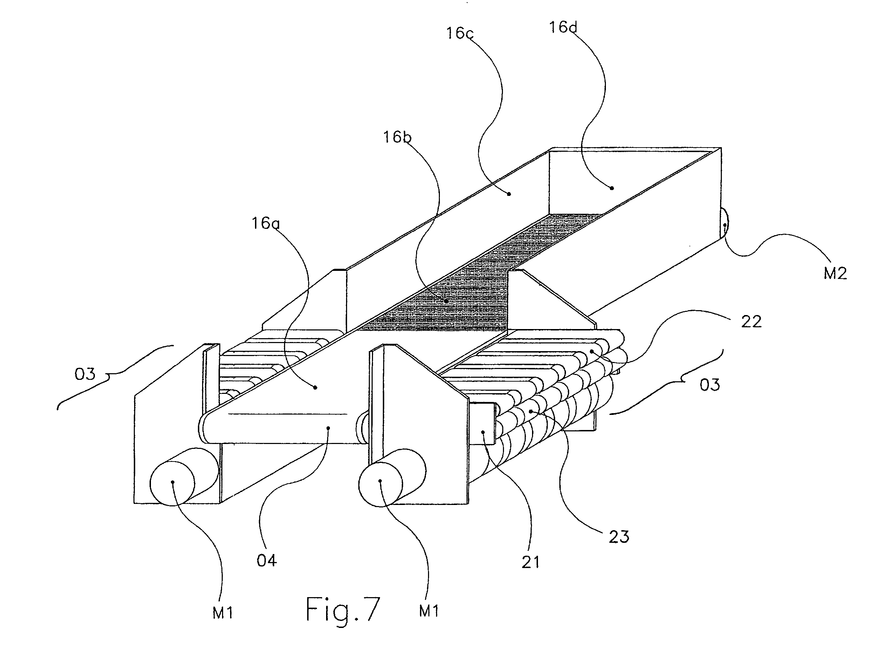

Les figures 5 et 6 illustrent, à titre d'exemples, deux configurations possibles de magasin. La rangée ou les deux rangées de rayonnages peuvent être parallèles (figure 6) ou perpendiculaires (figure 5) à la paroi E1 dans laquelle sont montés l'orifice de livraison 7 et l'interface utilisateur 8, ce qui permet une adaptation du système à la géométrie des locaux dans lesquels on désire l'implanter. Dans le cas d'un magasin à deux rangées parallèles de stockage R1 et R2, deux extracteurs symétriques 3 sont montés de part et d'autre du tapis d'accumulation 4, comme le montre notamment la figure 7.

L'installation comprend également un ensemble mobile se déplaçant devant les travées 14 de la rangée ou des rangées de rayonnages 1, cet ensemble comprenant un ou deux extracteurs 3 et un tapis d'accumulation 4, l'extracteur ou chaque extracteur 3 étant disposé latéralement par rapport au tapis d'accumulation 4.

L'extracteur ou chaque extracteur 3 est constitué d'une pluralité de bandes de transport sans fin 22 dont le brin supérieur 22a constitue une surface réceptrice mobile et dont la largeur et l'espacement correspondent approximativement à la largeur et à l'espacement des bandes de transport 13, tandis que le tapis d'accumulation 4 est constitué d'une unique bande de transport sans fin.

Les bandes de transport 22 et les bandes de transport 4 circulent dans des directions perpendiculaires et les surfaces de leur brin supérieur actif sont, de préférence, placées au même niveau, ou sensiblement au même niveau.

Le tapis d'accumulation 4 comprend une zone de réception 16a sur laquelle se décharge(nt) le ou les extracteur(s) 3 et une zone d'accumulation 16b bordée latéralement par des parois fixes 16c et à son extrémité avant par une paroi 16d.

La mise en mouvement des bandes de transport 22 et 4 est assurée par des moteurs M1 et M2, respectivement, de préférence constitués par des moteurs électriques.

L'ensemble (extracteur 3 + tapis d'accumulation 4) est embarqué sur un robot deux axes 5 se déplaçant devant la façade des rayonnages 1 et assurant le positionnement d'un extracteur 3 face à la travée correspondant à l'objet à déstocker. L'extracteur ou chaque extracteur 3 est muni d'un tiroir mobile 21 présentant une largeur et un espacement correspondant sensiblement à la largeur et à l'espacement des bandes 13 des plateaux 2. La largeur du tiroir 21 est équivalente à celle du plus grand objet stocké laquelle correspond, par exemple, à la distance comprise entre les bords extérieur d'un groupe de six bandes 13.
Sur le tapis d'accumulation 4, la zone d'accumulation 16 permet le stockage temporaire des objets après leur extraction.

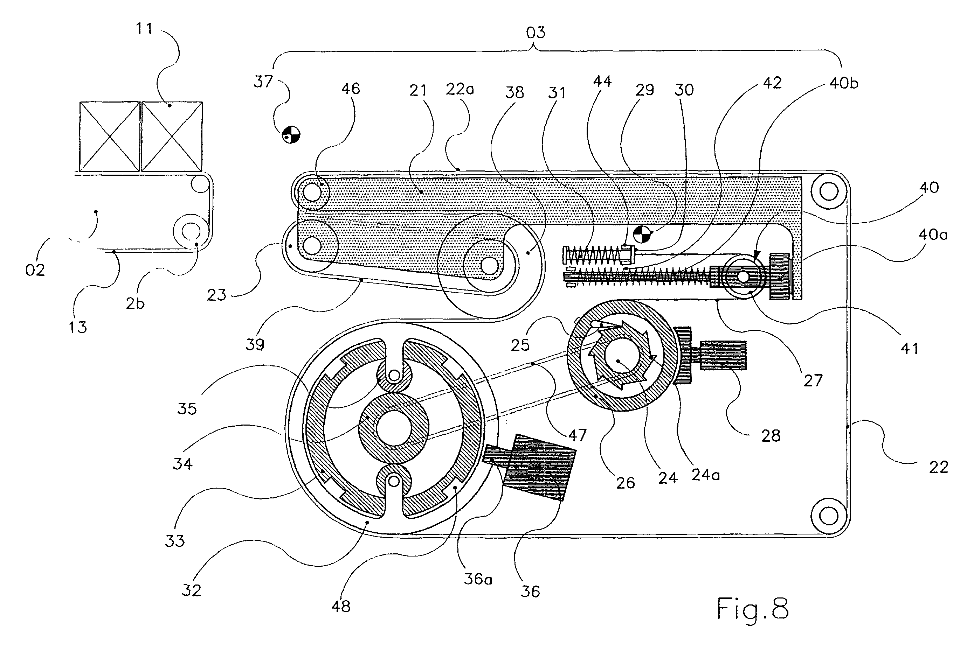

La motorisation permettant les mouvements d'accostage d'un extracteur et l'entraînement des bandes 13 concernées par l'accostage, est représentée aux figures 8 à 12.

Au niveau de chacune des deux faces latérales du tiroir 21 d'un extracteur 3, l'arbre moteur 24 entraîne une couronne 26 par l'intermédiaire d'un embrayage à encliquetage constitué d'un cliquet 25 porté par ladite couronne et s'appuyant sur une roue dentée 24a calée sur l'arbre moteur 24. Sur la couronne 26, est fixée l'une des extrémités d'un câble 27 dont l'autre extrémité est fixée sur l'une des extrémités d'une tige 30 montée avec une aptitude de translation axiale dans un guide fixe 44, à l'encontre de l'action antagoniste d'un ressort hélicoïdal 31 disposé autour de ladite tige et calé, par l'intermédiaire de ses extrémités opposées, d'une part, contre ledit guide fixe et, d'autre part, contre un épaulement constituant l'autre extrémité de la tige. Ces deux ressorts 31 assurent un appui élastique des galets presseurs 23 sur les extrémités frontales des bandes sans fin 13 des plateaux 2. D'autre part, le câble 27 s'enroule sur une poulie 41 portée par l'organe mobile d'une ventouse magnétique désignée dans son ensemble par la référence 40 à la figure 8. Cet organe mobile est solidaire d'une tige 40b montée avec une latitude de mouvement axial dans un guide fixe 45, à l'encontre de l'action antagoniste d'un ressort hélicoïdal 42 disposé autour de ladite tige 40b.

Un frein 28 est monté à proximité de la couronne 26 de sorte que son sabot ou patin de freinage 28a puisse être appuyé sur ladite couronne, en position active.

Le tiroir mobile 21 porte les galets presseurs 23 destinés à venir en appui contre les extrémités frontales des bandes 13, les volants 38 d'entraînement en rotation desdits galets presseurs par l'intermédiaire des courroies 39 et les poulies frontales 46 sur lesquelles s'enroulent les bandes transporteuses 22 dont le brin supérieur 22a circule au-dessus dudit tiroir. Les poulies frontales 46 se trouvent disposées en léger retrait par rapport aux galets presseurs 23, de sorte que lors de l'accostage du tiroir 21, seuls ces derniers entrent en contact avec les bandes 13.

Un premier capteur fixe 29 permet de détecter la position de la tige 30, tandis qu'un second capteur 37 , solidaire du tiroir 21, assure la détection du front arrière de l'objet 11a en cours de prélèvement.

L'extracteur comprend encore des systèmes d'embrayage permettant le pilotage de l'entraînement sélectif de chaque bande de transport 22 et du galet presseur 23 associé à celle-ci. Chacun de ces systèmes d'embrayage comprend un tambour 32 sur lequel s'enroule une bande de transport 22, ce tambour étant entraîné en rotation par l'intermédiaire d'un train épicycloïdal dont le pignon planétaire 34 est entraîné par une courroie 47 s'enroulant sur une poulie calée sur l'arbre moteur 24. Ce train épicycloïdal comprend le pignon moteur 34, des satellites 35, une couronne intermédiaire 33 et le tambour 32 sur lequel s'enroule la bande de transport 22. La couronne intermédiaire 33 est munie de crans périphériques 48 dans lesquels peut s'engager le pêne mobile 36a d'un verrou électrique 36. Grâce à cet agencement, seule(s) la ou les bande(s) 22 se trouvant en regard de la travée 14 à déstocker est ou sont mise(s) en mouvement lors du prélèvement d'un article 11.

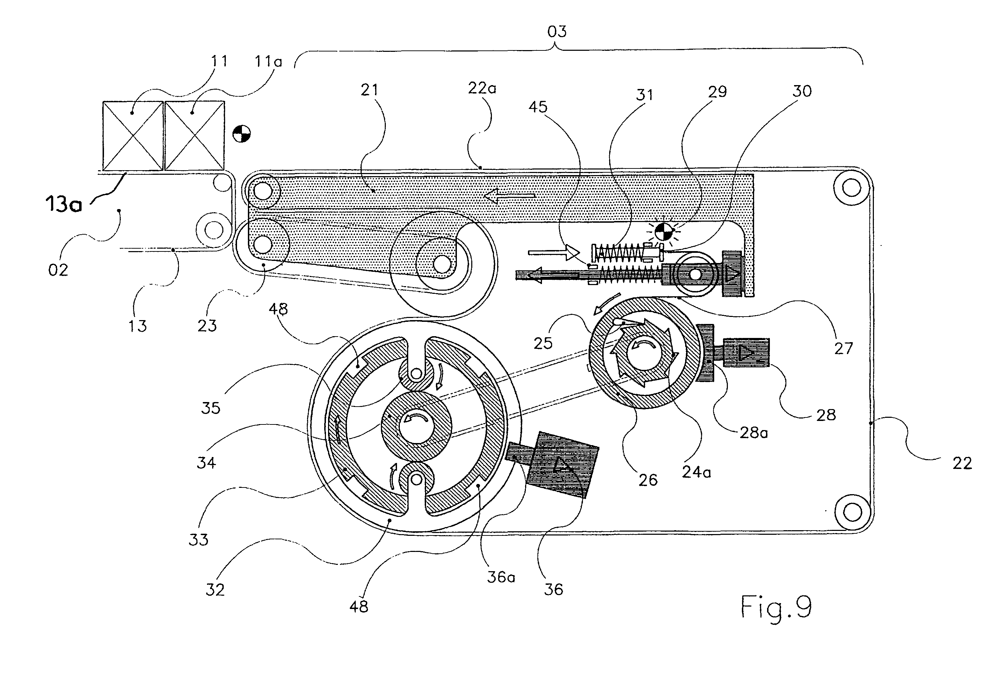

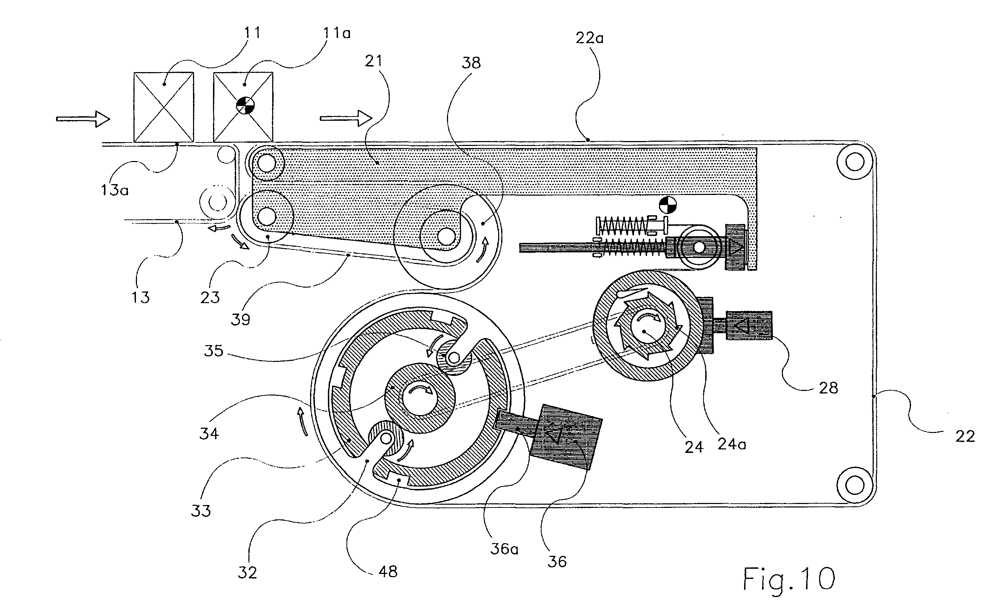

Lorsque le verrou 36 n'est pas piloté (figure 9), la rotation du pignon moteur 34 est transmise à la couronne intermédiaire 33 par l'intermédiaire des satellites, et le tambour 32 reste fixe. Lorsque le verrou 36 est piloté (figure 10), il immobilise la couronne intermédiaire 33. La rotation du pignon 34 est alors transmise au tambour 32 par l'intermédiaire des satellites 35. Dans sa rotation, le tambour 32 met en mouvement la bande 22 par adhérence.

De manière avantageuse, la vitesse linéaire et l'adhérence des bandes 22 de l'extracteur, sont supérieures à celles des bandes 13 des plateaux 2. Cet écart de vitesse est lié aux différents rayons d'enroulement des bandes 22 sur les volants 38, des courroies 39 sur ces mêmes volants 38 et sur les galets 23 ainsi qu'au diamètre des galets 23 qui entraînent par friction les bandes 13.

On décrit ci-après le fonctionnement de cet extracteur, lors des différentes phases de prélèvement des objets. Pour une meilleure lisibilité, une seule des bandes 22 du tiroir 21 est représentée.

Au repos, l'extracteur est dans la configuration schématisée en figure 8. Pour le prélèvement d'un objet, une rotation senestrorsum de l'arbre moteur 24 entraîne, par l'intermédiaire du système de roue libre 25, une rotation d'amplitude très limitée de la couronne 26 et le déplacement du câble 27, ce qui génère la sortie du tiroir 21 en direction du plateau de stockage 2 (figure 9). Les galets presseurs 23, liés au tiroir 21, viennent alors au contact des bandes 13 dudit plateau 2. L'accostage du tiroir 21 contre le plateau 2 provoque la traction du câble 27, le déplacement axial de la tige 30 et l'écrasement du ressort 31 qui calibre l'effort de pression des galets presseurs 23 sur les bandes 13. Cet écrasement déplace la cible 30, constituée par l'extrémité de la tige reliée au câble 27 et dont la détection par le capteur 29 provoque simultanément l'arrêt de l'arbre moteur et le serrage du frein 28 sur la couronne 26, assurant de la sorte le maintien en position du tiroir contre le plateau 2.

Lors de l'accostage du tiroir mobile, le brin supérieur 22a des bandes 22 se trouve placé au même niveau que celui du brin supérieur 13a des bandes 13 contre lesquelles les galets presseurs 23 se trouvent placés en appui.

L'accostage du tiroir étant effectué, l'arbre moteur 24 est mis en rotation dextrorsum et les bandes 22 en regard de la travée à déstocker sont embrayées par suite de l'immobilisation de la couronne intermédiaire 33 de leur système d'embrayage, résultant de l'engagement du pêne 36a du verrou 36 dans l'un des crans 48 de ladite couronne (figure 10). Un actionneur (non représenté) actionne sélectivement le verrou 36 du système d'embrayage d'une ou plusieurs bandes 22, en fonction du nombre de bandes de transport 13 constituant la travée supportant l'objet à prélever. Dans leur mouvement, les bandes 22 entraînent en rotation les galets presseurs 23 par l'intermédiaire des volants 38 et des courroies 39. Les galets presseurs 23 entraînent par friction les bandes 13 de la travée à déstocker. Dans leur mouvement, les bandes 13 déplacent avec elles les objets stockés 11. Lorsque le premier objet 11a de la travée est transféré sur l'extracteur, il est alors accéléré par les bandes 22 dont la vitesse linéaire et l'adhérence sont supérieures à celles des bandes 13. On obtient ainsi l'égrenage des objets lors de leur prélèvement.

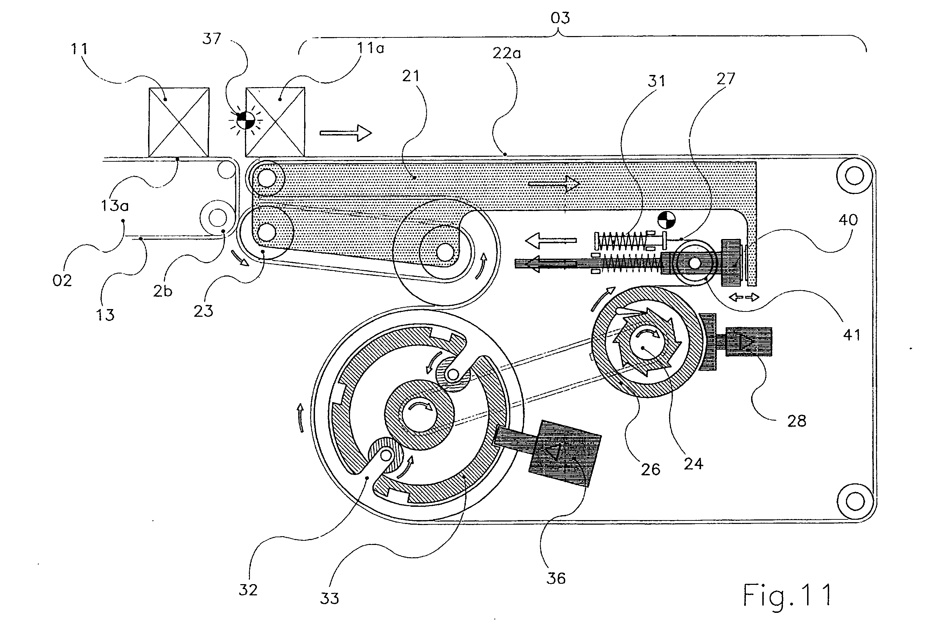

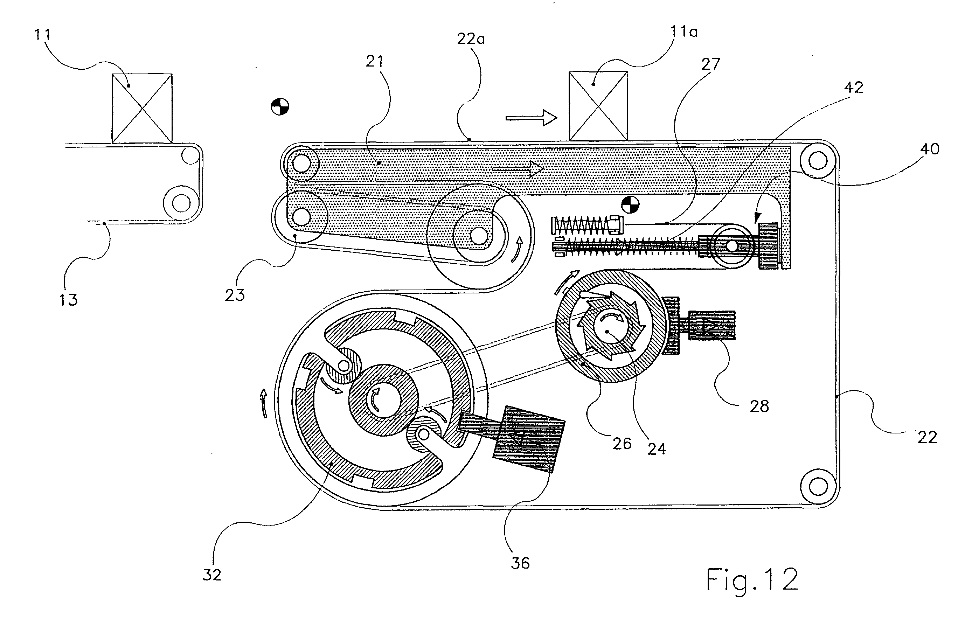

En détectant le passage du front arrière de l'objet 11a en cours de prélèvement, le capteur 37 pilote le décollement de la ventouse magnétique 40 et le relâchement du frein 28 (figure 11). Ainsi, le tiroir 21 est désolidarisé de l'axe d'enroulement du câble 41 pendant une fraction de seconde, ce qui permet son décollement immédiat du plateau 2 par le relâchement de la tension du ressort 31. La perte de contact entre les galets 23 et les bandes 13 stoppe l'avancée des autres objets 11 de la travée. Pour terminer l'escamotage du tiroir 21, le relâchement du frein 28 a libéré la couronne 26 et la rentrée totale du tiroir est assurée par le ressort 42 (figure 12). Durant cette phase, les bandes 22 poursuivent leur mouvement et assurent par convoyage le transfert de l'objet prélevé vers la zone de réception 16a du tapis d'accumulation 4, qui l'achemine en zone d'accumulation 16b.

Si la commande comprend d'autres objets, l'extracteur 3 vient se positionner face à la travée correspondant à l'objet suivant et y effectue un nouveau déstockage. Les objets précédemment extraits sont alors stockés temporairement en zone d'accumulation 16b du tapis d'accumulation 4. La surface glissante de la bande de transport du tapis 4 lui permet de glisser sous les objets accumulés lorsqu'ils arrivent contre la butée 16d. Lorsque tous les objets commandés ont été extraits, le tapis d'accumulation 4 est actionné en sens inverse et vient accoster le tapis de livraison 6 pour y transférer les objets, qui sont ensuite acheminés vers l'orifice de livraison 7 par le tapis de livraison 6. Les dimensions de chacun des produits en stocks sont connues du système de contrôle et de commande de sorte qu'une commande volumineuse peut être fractionnée et livrée en plusieurs fois.

Le fait que le transfert des objets commandés 11 depuis leur travée de stockage 14 jusqu'à l'orifice de livraison 7, est assuré par convoyage, sur leur face d'appui, au moyen des bandes de transport 13, 22, 4 et 6, est aussi une disposition caractéristique de la présente invention. Ce convoyage sur une succession de tapis de transport horizontaux ou sensiblement horizontaux permet notamment le traitement d'objets de natures, formes et/ou tailles variées, évite les chutes d'objets et limite les contraintes mécaniques subies par ces derniers.

## Revendications

1. Procédé de stockage et de distribution sélective d'articles divers, suivant lequel les objets sont stockés dans des travées (14) des plateaux (2) d'un ensemble de rayonnages (1a, 1b, 1c) devant lesquels se déplace, sur deux axes perpendiculaires, un système d'extraction (3) approprié piloté par un système de contrôle et de commande, de sorte à venir se positionner devant la travée (14) d'un plateau (2) supportant le stock d'articles (11) correspondant à l'objet choisi, pour prélever au moins l'un de ces articles, **caractérisé en ce que** les objets ou articles (11) d'une même référence sont stockés les uns à la suite des autres, sur le brin supérieur (13a) d'une ou plusieurs bandes de transport sans fin (13) montées folles, une ou plusieurs de ces bandes de transport sans fin (13) constituant la surface réceptrice de chacune des différentes travées (14) d'un rayonnage de stockage (1), et **en ce que** la motorisation sélective des bandes de transport entraînant le déplacement des articles qu'elles supportent en direction d'un point de prélèvement, est obtenue par l'application de galets moteurs montés sur un extracteur mobile (3) se déplaçant devant ledit rayonnage de stockage, et entraînant par friction la ou les bandes de transport (13) de la travée (14) supportant les articles choisis ou commandés, de sorte à permettre le transfert d'au moins le premier de ces articles sur une surface réceptrice dudit extracteur.

2. Installation automatisée de stockage et de distribution d'articles divers, du genre comprenant :
- un ensemble de rayonnages (1) comprenant une pluralité de plateaux superposés (2) agencés, chacun, en une ou plusieurs travées (14) pour le stockage des articles (11), de sorte que les objets d'une même référence puissent être placés dans une même travée ;
- un moyen de réception et de transport piloté par un système de contrôle et de commande, se déplaçant devant ledit ensemble de rayonnages (1a, 1b, 1c), sur deux axes perpendiculaires, de sorte à pouvoir se positionner devant la travée (14) supportant le stock d'articles (11) correspondant à l'objet choisi et à transporter ledit article jusqu'à une ouverture ou sas de livrdison (7);
- un système d'extraction permettant de transférer l'objet choisi sur ledit moyen de réception et de transport (3-4) ;
- et une interface utilisateur (8) comprenant des moyens d'affichage et de sélection (9) des objets et, si nécessaire, des moyens de paiement automatique (10) ;
**caractérisée en ce que** la surface réceptrice des travées (14) sur laquelle reposent les articles (11) stockés, est constituée par le brin supérieur (13a) de bandes de transport sans fin (13) montées folles, et **en ce que** ledit moyen de réception et de transport et ledit système d'extraction, sont constitués par un extracteur (3) muni de galets de friction moteurs (23), des moyens (24, 24a, 25, 26, 27, 41, 50, 31) permettant l'application desdits galets de friction moteurs (23) contre la bande de transport ou du groupe de bandes de transport (13) de la travée supportant les articles choisis ou commandés, de sorte à permettre le transfert du premier de ces articles (11) sur une surface réceptrice (22a) dudit extracteur.

3. Procédé selon la revendication 1, **caractérisé en ce que** les objets (11) successivement prélevés d'une ou plusieurs travées par l'extracteur (3) lors d'une commande de plusieurs articles, sont transférés par ce dernier sur un tapis d'accumulation (4) se déplaçant avec ledit extracteur et capable de réceptionner et de stocker temporairement les objets prélevés avant leur transfert jusqu'à une ouverture ou sas de livraison (7).

4. Procédé suivant l'une des revendications 1 ou 3, **caractérisé en ce que** le transfert des objets (11) depuis leur travée de stockage (14) jusqu'à l'orifice de livraison (7) est assuré par convoyage sur leur face d'appui au moyen de bandes de transport (13, 22, 4, 6).

5. Procédé selon l'une quelconque des revendications 1, 3 ou 4, **caractérisé en ce que** le réglage de la largeur des travées (14) en fonction de la grosseur et de la conformation des objets (11), est obtenu au moyen de séparations amovibles (15) divisant chaque plateau (2) en plusieurs travées comprenant un nombre variable de bandes de transport (13).

6. Procédé suivant l'une quelconque des revendications 1 ou 3 à 5, **caractérisé en ce que** des codes à barres (43) sont affectés :
- d'une part, à chacune des bandes de transport (13) des plateaux (2), et ;
- d'autre part, à chaque altitude de positionnement possible des plateaux (2) sur les montants (12) ;
et **en ce que** l'agencement des plateaux (2) et des travées (14) est enregistré dans le système de contrôle et de commande de l'installation par l'intermédiaire d'un terminal de lecture de codes à barres portable.

7. Procédé selon l'une quelconque des revendications 1 ou 3 à 6, **caractérisé par** les étapes ci-après :
- sélection des objets à distance sur un réseau informatique-relié à l'installation ;
- réservation des objets commandés à distance, pour une durée déterminée ;
- prélèvement et livraison des objets commandés par l'installation, après rappel par l'utilisateur du numéro du dossier remis à distance au moyen de l'écran de visualisation et de saisie (9) et, si nécessaire, paiement du prix des objets au moyen des périphériques de paiement automatique (10).

8. Installation selon la revendication 2, **caractérisée en ce que** la surface réceptrice de chaque plateau de stockage (2) est constituée par une pluralité de bandes de transport sans fin étroites faiblement espacées (13), montées folles individuellement, et **en ce que** l'ossature métallique (2a) disposée sous le brin supérieur (13a) desdites bandes est pourvue de rangées d'ouvertures (15b) s'étendant parallèlement à ces dernières et au-dessous des espaces ménagés entre celles-ci, pour le montage amovible de séparations verticales (15) permettant la division de chaque plateau (2) en plusieurs travées (14) de largeurs égales ou différentes et dont les surfaces réceptrices sont constituées d'une ou plusieurs bandes de transport.

9. Installation suivant l'une des revendications 2 ou 8, **caractérisée en ce que** les montants (12) et les bords latéraux de la structure métallique (2a) des plateaux sont agencés de manière complémentaire pour permettre la fixation amovible et à différentes altitudes desdits plateaux sur lesdits montants.

10. Installation selon l'une quelconque des revendications 2, 8 ou 9, **caractérisée en ce que** la surface réceptrice de l'extracteur ou de chaque extracteur (3) est constituée par le brin supérieur (22a) d'une pluralité de bandes de transport sans fin (22) dont la largeur et l'espacement correspondent approximativement à la largeur et à l'espacement des bandes de transport (13) des plateaux (2).

11. Installation suivant l'une quelconque des revendications 2 ou 8 à 10, **caractérisée en ce qu'**elle comprend un ensemble d'extraction comportant au moins un extracteur (3) et un tapis d'accumulation (4) constitué d'une bande de transport sans fin (4).

12. Installation suivant les revendications 10 et 11, **caractérisée en ce que** le brin supérieur (22a) des bandes de transport (22) de l'extracteur ou de chaque extracteur (3) et le brin supérieur (16a, 16b) du tapis d'accumulation (4), circulent dans des directions perpendiculaires et sont, de préférence, placés au même niveau.

13. Installation selon l'une quelconque des revendications 2 ou 8 à 12, **caractérisée en ce que** les ensembles de rayonnages sont disposés en deux rangées parallèles (R1, R2) se faisant face et **en ce que** l'ensemble d'extraction peut se déplacer entre ces deux rangées et comprend un tapis d'accumulation (4) et deux extracteurs (3) disposés de part et d'autre dudit tapis d'accumulation (4).

14. Installation suivant l'une quelconque des revendications 2 ou 8 à 13, **caractérisée en ce que** l'extracteur (3) ou l'ensemble constitué par le ou les extracteurs (3) et le tapis d'accumulation (4) est embarqué sur un robot deux axes (5) se déplaçant devant la ou les rangées de rayonnages (1).

15. Installation selon l'une quelconque des revendications 2 ou 8 à 14, **caractérisée en ce que** l'ensemble des moyens assurant le transfert des objets commandés (11) depuis leur travée de stockage (14) jusqu'à l'orifice de livraison (7) est constitué par des bandes de transport (13, 22, 4 et 6).

16. Installation suivant l'une quelconque des revendications 2 ou 8 à 15, **caractérisée en ce que** chacune des bandes (13) des plateaux (2), ainsi que les altitudes de positionnement possible des plateaux (2) sur les montants (12) sont identifiées au moyen de codes à barres (43) placés à l'arrière des rayonnages (1) du côté opposé à celui du prélèvement.

17. Installation selon l'une quelconque des revendications 8 à 16, **caractérisée en ce que** les bandes de transport (22) de l'extracteur (3) ou de chaque extracteur (3) sont entraînées à une vitesse supérieure à celle des bandes de transport (13) des plateaux (2) et **en ce que** la surface porteuse des bandes de transport (22) de l'extracteur (3) ou de chaque extracteur (3) présente, de préférence, un coefficient d'adhérence supérieur à celui de la surface porteuse des bandes de transport (13) des plateaux (2).

18. Installation suivant l'une quelconque des revendications 2 ou 8 à 17, **caractérisée en ce que** l'extracteur (3) ou chaque extracteur (3) est équipé d'un capteur (37) qui détecte l'espace créé derrière un objet prélevé (11a) et déclenche le désaccouplement des galets de friction (23) et des bandes (13) des plateaux (2) et stoppe ainsi l'avancée des autres objets de la travée concernée.

19. Installation selon l'une quelconque des revendications 2 ou 8 à 18, **caractérisée en ce que** l'extracteur (3) ou chaque extracteur (3) comprend :
- d'une part, un tiroir mobile (21) portant les galets presseurs (23) destinés à venir en appui contre les extrémités frontales des bandes (13) des plateaux (2), les volants (38) d'entraînement en rotation desdits galets presseurs (23) par l'intermédiaire de courroies (39) et les poulies frontales (46) sur lesquelles s'enroulent les bandes transporteuses (22) dudit extracteur dont le brin supérieur (22a) circule au-dessus de ce tiroir (21), et,
- d'autre part, des moyens assurant les mouvements d'accostage et de recul dudit tiroir mobile (21), de sorte que ce dernier puisse occuper deux positions, soit une première position neutre selon laquelle les galets presseurs (23) se trouvent éloignés des extrémités des bandes (13) des plateaux (2) et une deuxième position active suivant laquelle lesdits galets (23) se trouvent pressés contre lesdites extrémités des bandes (13) des plateaux (2).

20. Installation selon l'une quelconque des revendications 2 ou 8 à 19, **caractérisée en ce que** l'extracteur (3) ou chaque extracteur (3) est pourvu de moyens (31) assurant un appui élastique des galets presseurs (23) contre les extrémités frontales des bandes (13) des plateaux (2).

21. Installation suivant les revendications 19 et 20, **caractérisée en ce que** les moyens assurant les mouvements d'accostage et de recul du tiroir mobile (21) comprennent un arbre moteur (24) entraînant unidirectionnellement, par l'intermédiaire d'un encliquetage, une couronne (26), un frein (28) monté à proximité de ladite couronne et dont le sabot ou patin (28a) peut être appuyé sur la périphérie de celle-ci, un lien flexible tel qu'un câble (27) fixé, par l'intermédiaire de ses extrémités opposées, d'une part, à ladite couronne (26) et, d'autre part, à l'extrémité d'une tige (30) mobile axialement à l'encontre de l'action antagoniste d'un ressort (31), ce câble s'enroulant sur une poulie (41) portée par l'organe mobile (40a) d'une ventouse magnétique (40) permettant de rendre ladite poulie (41) solidaire en translation dudit tiroir mobile (21).

22. Installation selon la revendication 21, **caractérisée en ce que** l'organe mobile (40a) de la ventouse magnétique (40) est soumis à l'action d'un ressort de rappel (42) tendant à le ramener en position d'adhérence au tiroir mobile (21).

23. Installation selon l'une quelconque des revendications 10 à 22, **caractérisée en ce que** l'entraînement en rotation des galets presseurs (23) est obtenu au moyen des bandes de transport (22) par l'intermédiaire d'un volant étagé (38) sur le grand diamètre duquel s'enroule chaque bande (22) et d'une courroie (39) s'enroulant, d'une part, sur le petit diamètre du volant étagé (38) et, d'autre part, sur le galet presseur (23).

24. Installation selon la revendication 23, **caractérisée en ce que** l'extracteur (3) ou chaque extracteur (3) comprend des systèmes d'embrayage permettant l'entraînement sélectif de chaque bande de transport (22), chacun de ces systèmes d'embrayage comprenant un tambour (32) sur lequel s'enroule une bande de transport (22), ce tambour étant entraîné en rotation par l'intermédiaire d'un train épicycloïdal comprenant un pignon moteur (34), des satellites (35), une couronne intermédiaire (33) et ledit tambour (32), la couronne intermédiaire (33) de ce train épicycloïdal étant pourvue de crans périphériques (48) dans lesquels peut s'engager le pêne mobile (36a) d'un verrou électrique (36).

## Claims

1. A process for the storage and selective distribution of various articles, wherein the objects are stored in tiers (14) of the trays (2) of an assembly of sets of shelves (1a, 1b, 1c), in front of which there is displaced on two perpendicular axes a suitable extraction system (3) pilot-controlled by a control and ordering system so as to assume a position in front of the tier (14) of a tray (2) supporting the store of articles (11) corresponding to the selected object, in order to remove at least one of said articles, **characterised in that** the objects or articles (11) of the same reference are stored in succession on the upper run (13a) of one or more freely movably mounted endless conveyor belts (13), one or more of said endless conveyor belts (13) constituting the receiving surface of each of the different tiers (14) of a set of storage shelves (1), and that selective motorisation of the conveyor belts causing displacement of the articles that they support in the direction of a removal point is effected by the application of drive wheels mounted on a mobile extracting device (3) which is displaced in front of said set of storage shelves and entraining by friction the conveyor belt or belts (13) of the tier (14) supporting the selected or ordered articles in such a way as to permit transfer of at least the first of said articles on to a receiving surface of said extracting device.

2. An automated installation for the storage and distribution of various articles of the kind comprising
- an assembly of sets of shelves (1) comprising a plurality of superposed trays (2) each arranged in one or more tiers (14) for storage of the articles (11) in such a way that the objects having the same reference can be placed in the same tier;
- a receiving and conveyor means pilot-controlled by a control and ordering system, which is displaced in front of said assembly of sets of shelves (1a, 1b, 1c) on two perpendicular axes so as to be capable of adopting a position in front of the tier (14) supporting the store of articles (11) corresponding to the selected object and conveying said article to a delivery chamber or opening (7);
- an extraction system permitting the selected object to be transferred on to said receiving and conveyor means (3-4); and
- a user interface (8) comprising means (9) for displaying and selecting the objects and if necessary automatic payment means (10);
**characterised in that** the receiving surface of the tiers (14) on which the stored articles (11) rest is formed by the upper run (13a) of freely movably mounted endless conveyor belts (13) and that said receiving and conveyor means and said extraction system are formed by an extracting device (3) provided with frictional drive wheels (23), means (24, 24a, 25a, 26, 27, 41, 50, 31) permitting the application of said frictional drive wheels (23) against the conveyor belt or the group of conveyor belts (13) of the tier supporting the selected or ordered articles, in such a way as to permit transfer of the first of said articles (11) on to a receiving surface (22a) of said extracting device.

3. A process according to claim 1 **characterised in that** the objects (11) successively removed from one or more tiers by the extracting device (3) upon ordering a plurality of articles are transferred by the latter on to an accumulation belt member (4) which is displaced with said extracting device and capable of receiving and storing temporarily the objects removed prior to their transfer to a delivery chamber or opening (7).

4. A process according to one of claims 1 and 3 **characterised in that** transfer of the objects (11) from their storage tier (14) to the delivery opening (7) is effected by conveying on their support face by means of conveyor belts (13, 22, 4, 6).

5. A process according to any one of claims 1, 3 and 4 **characterised in that** regulation of the width of the tiers (14) in dependence on the size and the configuration of the objects (11) is effected by means of removable separating means (15) dividing each tray (2) into a plurality of tiers comprising a variable number of conveyor belts (13).

6. A process according to any one of claims 1 and 3 to 5 **characterised in that** bar codes (43) are allocated:
- on the one hand to each of the conveyor belts (13) of the trays (2), and;
- on the other hand to each possible positioning height of the trays (2) on the uprights (12);
and that the arrangement of the trays (2) and the tiers (14) is recorded in the control and ordering system of the installation by means of a portable bar code reading terminal.

7. A process according to any one of claims 1 and 3 to 6 **characterised by** the following steps:
- selection of the objects remotely on a data network connected to the installation;
- reservation of the objects ordered remotely for a given period of time; and
- removal and delivery of the objects ordered by the installation after call-up by the user of the number of the file set remotely by the display and acquisition screen (9) and if necessary payment of the price of the objects by means of the automatic payment peripheral units (10).

8. An installation according to claim 2 **characterised in that** the receiving surface of each storage tray (2) is constituted by a plurality of individually freely movably mounted, closely spaced narrow endless conveyor belts (13) and that the metal framework (2a) disposed below the upper run (13a) of said belts is provided with rows of openings (15b) extending in parallel relationship therewith and below the spaces provided therebetween for removable mounting of vertical separating means (15) permitting the division of each tray (2) into a plurality of tiers (14) of equal or different widths and the receiving surfaces of which are constituted by one or more conveyor belts.

9. An installation according to one of claims 2 and 8 **characterised in that** the uprights (12) and the lateral edges of the metallic structure (2a) of the trays are arranged in complementary relationship to permit removable fixing at different heights of said trays to said uprights.

10. An installation according to any one of claims 2, 8 and 9 **characterised in that** the receiving surface of the extracting device or each extracting device (3) is formed by the upper run (22a) of a plurality of endless conveyor belts (22) whose width and spacing approximately correspond to the width and spacing of the conveyor belts (13) of the trays (2).

11. An installation according to any one of claims 2 and 8 to 10 **characterised in that** it comprises an extraction assembly including at least one extracting device (3) and an accumulation belt member (4) formed by an endless conveyor belt (4).

12. An installation according to claims 10 and 11 **characterised in that** the upper run (22a) of the conveyor belts (22) of the extracting device or each extracting device (3) and the upper run (16a, 16b) of the accumulation belt member (4) circulate in perpendicular directions and are preferably placed at the same level.

13. An installation according to any one of claims 2 and 8 to 12 **characterised in that** the assemblies of sets of shelves are disposed in two parallel rows (R1, R2) in mutually facing relationship and that the extraction assembly can be displaced between said two rows and comprises an accumulation belt member (4) and two extracting devices (3) disposed on respective sides of said accumulation belt member (4).

14. An installation according to any one of claims 2 and 8 to 13 **characterised in that** the extracting device (3) or the assembly formed by the extracting device or devices (3) and the accumulation belt member (4) is mounted on a double-axis robot (5) which is displaced in front of the row or rows of sets of shelves (1).

15. An installation according to any one of claims 2 and 8 to 14 **characterised in that** the assembly of the means providing for transfer of the ordered objects (11) from their storage tier (14) to the delivery opening (7) is formed by conveyor belts (13, 22, 4 and 6).

16. An installation according to any one of claims 2 and 8 to 15 **characterised in that** each of the belts (13) of the trays (2) and the possible positioning heights of the trays (2) on the uprights (12) are identified by means of bar codes (43) placed to the rear of the sets of shelves (1) on the side opposite to the removal side.

17. An installation according to any one of claims 8 to 16 **characterised in that** the conveyor belts (22) of the extracting device (3) or of each extracting device (3) are driven at a speed higher than that of the conveyor belts (13) of the trays (2) and that the carrying surface of the conveyor belts (22) of the extracting device (3) or each extracting device (3) preferably has a coefficient of adhesion greater than that of the carrying surface of the conveyor belts (13) of the trays (2).

18. An installation according to any one of claims 2 and 8 to 17 **characterised in that** the extracting device (3) or each extracting device (3) is provided with a sensor (37) which detects the space created behind a removed object (11a) and triggers disconnection of the friction wheels (23) and the belts (13) of the trays (2) and thus stops the advance movement of the other objects of the tray in question.

19. An installation according to any one of claims 2 and 8 to 18 **characterised in that** the extracting device (3) or each extracting device (3) comprises:
- on the one hand a movable slider (21) carrying the pressing wheels (23) intended to bear against the front ends of the belts (13) of the trays (2), the pulleys (38) for driving said pressing wheels (23) in rotation by way of drive belts (39) and the front pulleys (46) around which are passed the conveyor belts (22) of said extracting device, the upper run (22a) of which circulates above said slider (21), and
- on the other hand means for implementing the approach and return movement of said movable slider (21) in such a way that the latter can occupy two positions, namely a first neutral position in which the pressing wheels (23) are moved away from the ends of the belts (13) of the trays (2) and a second active position in which said wheels (23) are pressed against said ends of the belts (13) of the trays (2).

20. An installation according to any one of claims 2 and 8 to 19 **characterised in that** the extracting device (3) or each extracting device (3) is provided with means (31) for causing the pressing wheels (23) to bear resiliently against the front ends of the belts (13) of the trays (2).

21. An installation according to claims 19 and 20 **characterised in that** the means for implementing the approach and return movements of the movable slider (21) comprise a drive shaft (24) which is driven in one direction by way of a pawl mechanism, a ring (26), a brake (28a) mounted in the proximity of said ring and the brake block or shoe (28a) of which can be caused to bear against the periphery thereof, a flexible connection such as a cable (27) fixed by way of its opposite ends on the one hand to said ring (26) and on the other hand to the end of a rod (30) movable axially against the counteracting force of a spring (31), said cable passing around a pulley (41) carried by the movable member (40a) of a magnetic adhesion disc (40) permitting said pulley (41) to be fixed in respect of translatory movement with respect to said movable slider (21).

22. An installation according to claim 21 **characterised in that** the movable member (40a) of the magnetic adhesion disc (40) is subjected to the force of a return spring (42) tending to return it to the position of adhering to the movable slider (21).

23. An installation according to any one of claims 10 to 22 **characterised in that** the rotational drive for the pressing wheels (23) is implemented by means of the conveyor belts (22) by way of a stepped pulley (38), around the large diameter of which passes each belt (22) and a drive belt (39) which passes on the one hand around the small diameter of the stepped pulley (38) and on the other hand around the pressing wheel (23).

24. An installation according to claim 23 **characterised in that** the extracting device (3) or each extracting device (3) comprises clutch systems permitting selective drive for each conveyor belt (22), each of said clutch systems comprising a drum (32) around which a conveyor belt (22) passes, said drum being driven in rotation by way of an epicyclic train comprising a drive pinion (34), planet gears (35), an intermediate ring (33) and said drum (32), the intermediate ring (33) of said epicyclic train being provided with peripheral notches (48) into which can engage the movable bolt (36a) of an electric lock (36).

## Patentansprüche

1. Verfahren zur Lagerung und selektiven Verteilung von verschiedenen Stückgütern, bei dem die Gegenstände in Fächerreihen (14) von Tabletts (2) einer Anordnung von Etagengestellen (1a, 1b, 1c) gelagert sind, vor denen sich auf zwei senkrechten Achsen ein geeignetes Entnahmesystem (3) bewegt, das durch ein Kontrollund Steuerungssystem so geführt wird, daß es sich vor der Fächerreihe (14) eines Tabletts (2) positioniert, das den Stückgutbestand (11) trägt, der dem gewählten Gegenstand entspricht, um wenigstens eines dieser Stückgüter zu entnehmen, **dadurch gekennzeichnet, daß** die Gegenstände oder Stückgüter (11) mit gleicher Referenz nacheinander auf dem Obertrum (13a) eines oder mehrerer beweglich befestigter Endlos-Förderbänder (13) gelagert werden, wobei eines oder mehrere dieser Endlos-Förderbänder (13) die Aufnahmeoberfläche jeder der verschiedenen Fächerreihen (14) eines Lagerungs-Etagengestelles (1) bilden, und dadurch, daß die selektive Motorisierung der Förderbänder, welche die Verlagerung der Stückgüter, die sie tragen, in Richtung auf einen Entnahmepunkt nach sich zieht, durch die Anwendung von motorischen Laufrollen erreicht wird, die auf einer mobilen Entnahmevorrichtung (3) montiert sind, die sich vor dem Lagerungs-Etagengestell hin und her bewegt und durch Reibung das oder die Förderbänder (13) der Fächerreihe (14) mitnimmt, welches die ausgewählten oder bestellten Stückgüter trägt, so daß die Übertragung wenigstens des ersten dieser Stückgüter auf eine Aufnahme-Oberfläche der Entnahmevorrichtung erfolgen kann.

2. Anlage zur automatisierten Lagerung und Verteilung verschiedener Stückgüter der Bauart, die enthält:
- eine Anordnung von Etagengestellen (1), umfassend eine Vielzahl von übereinander angeordneten Tabletts (2), die für die Lagerung der Stückgüter (11) jeweils in einer oder mehreren Fächerreihen (14) angeordnet sind, so daß die Gegenstände einer gleichen Referenz in einer gleichen Fächerreihe positioniert werden können;
- ein Mittel zur Aufnahme und zum Transportieren, das von einem Kontrollund Steuerungssystem geführt wird, wobei es sich vor der zusammenhängenden Gruppe von Etagengestellen (1a, 1b, 1c) auf zwei senkrechten Achsen so bewegt, daß es sich vor der Fächerreihe (14) positionieren kann, die den dem gewählten Gegenstand entsprechenden Stückgutbestand (11) trägt, und das Stückgut bis zu einer Öffnung oder Auslieferschleuse (7) transportiert;
- ein Entnahmesystem, das die Übertragung des ausgewählten Gegenstands auf das Mittel zur Aufnahme und zum Transportieren (3 - 4) gestattet;
- und eine Benutzerschnittstelle (8), die Mittel zum Anzeigen und Auswählen (9) der Gegenstände umfaßt sowie, falls erforderlich, Mittel für eine automatische Zahlung (10);
**dadurch gekennzeichnet, daß** die Aufnahme-Oberfläche der Fächerreihen (14), auf der die gelagerten Stückgüter (11) ruhen, aus dem Obertrum (13a) der beweglich befestigten Endlos-Förderbänder (13) gebildet wird, und dadurch, daß das Mittel zur Aufnahme und zum Transportieren und das Entnahmesystem aus einer Entnahmevorrichtung (3) gebildet werden, die mit motorischen Reiblaufrollen (23) ausgestattet ist, wobei Mittel (24, 24a, 25, 26, 27, 41, 50, 31) das Anlegen der motorischen Reiblaufrollen (23) an das Förderband oder die Gruppe von Förderbändern (13) der Fächerreihe gestatten, welche die ausgewählten oder bestellten Stückgüter trägt, so daß die Übertragung des ersten dieser Stückgüter (11) auf eine Aufnahme-Oberfläche (22a) der Entnahmevorrichtung ermöglicht wird.

3. Verfahren nach Anspruch 1, **dadurch gekennzeichnet, daß** die Gegenstände (11), die bei einer Bestellung von mehreren Stückgütern nacheinander aus einer oder mehreren Fächerreihen durch die Entnahmevorrichtung (3) entnommen werden, durch die letztere auf ein Sammelband (4) übertragen werden, das sich mit der Entnahmevorrichtung bewegt und vorübergehend die entnommenen Gegenstände aufnehmen und lagern kann, bevor sie zu einer Öffnung oder Auslieferschleuse (7) transportiert werden.

4. Verfahren nach einem der Ansprüche 1 oder 3, **dadurch gekennzeichnet, daß** die Übertragung der Gegenstände (11) von der Lagerungs-Fächerreihe (14) bis zur Auslieferöffnung (7) durch Überführung auf ihrer Auflagefläche mittels der Förderbänder (13, 22, 4, 6) sichergestellt wird.

5. Verfahren nach einem der Ansprüche 1, 3 oder 4, **dadurch gekennzeichnet, daß** die Regelung der Breite der Fächerreihen (14) in Abhängigkeit von der Größe und der Ausformung der Gegenstände (11) mittels abnehmbarer Trennwände (15) erreicht wird, die jedes Tablett (2) in mehrere Fächerreihen unterteilen, die eine variable Anzahl von Förderbändern (13) umfassen.

6. Verfahren nach einem der Ansprüche 1 oder 3 bis 5, **dadurch gekennzeichnet, daß** Strichcodes (43) verwendet werden;
- einerseits an jedem der Förderbänder (13) der Tabletts (2); und
- andererseits auf jeder möglichen Positionshöhe der Tabletts (2) auf den Streben (12);
und dadurch, daß die Anordnung der Tabletts (2) und der Fächerreihen (14) in dem Kontroll- und Steuerungssystem der Anlage über eine tragbare Strichcode-Lesevorrichtung erfaßt wird.

7. Verfahren nach einem der Ansprüche 1 oder 3 bis 6, **gekennzeichnet durch** die folgenden Etappen:
- Fernauswahl der Gegenstände über ein Datennetz, das mit der Anlage verbunden ist;
- Reservierung der per Femauswahl bestellten Gegenstände für eine vorgegebene Dauer;
- Entnahme und Lieferung der bestellten Gegenstände **durch** die Anlage nach Wiederholung der entfernt ausgegebenen Nummer **durch** den Benutzer über den Anzeige- und Erfassungs-Bildschirm (9) und, falls erforderlich, Bezahlung des Preises der Gegenstände mittels Peripheriegeräten für die automatische Zahlung (10).

8. Anlage nach Anspruch 2, **dadurch gekennzeichnet, daß** die Aufnahme-Oberfläche jedes Lagerungs-Tabletts (2) aus einer Vielzahl von schmalen Endlos-Förderbändern (13) gebildet wird, die geringfügig voneinander beabstandet und einzeln beweglich montiert sind, und dadurch, daß das Metallgerüst (2a), das unter dem Obertrum (13a) der Bänder angeordnet ist, mit einer Reihe von Öffnungen (15b) versehen ist, die sich parallel zu diesen letzteren und unter den Zwischenräumen erstrecken, die zwischen diesen ausgespart sind, für die abnehmbare Montage von vertikalen Trennwänden (15), welche die Unterteilung jedes Tabletts (2) in mehrere Fächerreihen (14) mit gleichen oder verschiedenen Breiten gestattet und deren Aufnahme-Oberflächen aus einem oder mehreren Förderbändern gebildet werden.

9. Anlage nach einem der Ansprüche 2 oder 8, **dadurch gekennzeichnet, daß** die Streben (12) und die Seitenränder der Metallstruktur (2a) der Tabletts komplementär angeordnet sind, um das veränderbare Befestigen und das Befestigen der Tabletts auf unterschiedlichen Höhen an den Streben zu gestatten.

10. Anlage nach einem der Ansprüche 2, 8 oder 9, **dadurch gekennzeichnet, daß** die Aufnahme-Oberfläche der Entnahmevorrichtung oder jeder Entnahmevorrichtung (3) durch das Obertrum (22a) einer Vielzahl von Endlos-Förderbändern gebildet wird, deren Breite und Beabstandung annähernd der Breite und der Beabstandung der Förderbänder (13) der Tabletts (2) entsprechen.

11. Anlage nach einem der Ansprüche 2 oder 8 bis 10, **dadurch gekennzeichnet, daß** sie ein Entnahmesystem umfaßt, das wenigstens eine Entnahmevorrichtung (3) und ein Sammelband (4) umfaßt, das aus einem Endlos-Förderband (4) gebildet wird.

12. Anlage nach den Ansprüchen 10 und 11, **dadurch gekennzeichnet, daß** das Obertrum (22a) der Förderbänder (22) der Entnahmevorrichtung oder jeder Entnahmevorrichtung (3) und das Obertrum (16a, 16b) des Sammelbands (4) in zueinander senkrechten Richtungen umlaufen und vorzugsweise auf der gleichen Ebene positioniert sind.

13. Anlage nach einem der Ansprüche 2 oder 8 bis 12, **dadurch gekennzeichnet, daß** die zusammenhängenden Gruppen von Etagengestellen in zwei parallelen Reihen (R1, R2) angeordnet sind, die sich gegenüberliegen, und dadurch, daß das Entnahmesystem sich zwischen diesen zwei Reihen hin und her bewegen kann und ein Sammelband (4) und zwei Entnahmevorrichtungen (3) umfaßt, die zu beiden Seiten des Sammelbands (4) angeordnet sind.

14. Anlage nach einem der Ansprüche 2 oder 8 bis 13, **dadurch gekennzeichnet, daß** die Entnahmevorrichtung (3) oder das System, das aus der oder den Entnahmevorrichtungen (3) gebildet wird, und das Sammelband (4) auf einem zweiachsigen Roboter (5) angebracht sind, der sich vor der bzw. den Reihen der Etagengestelle (1) bewegt.

15. Anlage nach einem der Ansprüche 2 oder 8 bis 14, **dadurch gekennzeichnet, daß** die Gesamtheit der Mittel, die den Transport der bestellten Gegenstände (11) von ihrer Lagerungs-Fächerreihe (14) bis zur Auslieferöffnung (7) sicherstellen, aus Förderbändern (13, 22, 4 und 6) gebildet wird.

16. Anlage nach einem der Ansprüche 2 oder 8 bis 15, **dadurch gekennzeichnet, daß** jedes der Bänder (13) der Tabletts (2) sowie die möglichen Positionierungshöhen der Tabletts (2) an den Streben (12) mittels Strichcodes (43) **gekennzeichnet** sind, die an der Rückseite der Etagengestelle (1) an der Seite angebracht sind, die derjenigen der Entnahme gegenüberliegt.

17. Anlage nach einem der Ansprüche 8 bis 16, **dadurch gekennzeichnet, daß** die Förderbänder (22) der Entnahmevorrichtung (3) oder jeder Entnahmevorrichtung (3) mit einer Geschwindigkeit angetrieben werden, die höher ist als diejenige der Förderbänder (13) der Tabletts (2), und dadurch, daß die tragende Oberfläche der Förderbänder (22) der Entnahmevorrichtung (3) oder jeder Entnahmevorrichtung (3) vorzugsweise einen Haftwert aufweist, der höher ist als derjenige der tragenden Oberfläche der Förderbänder (13) der Tabletts (2).

18. Anlage nach einem der Ansprüche 2 oder 8 bis 17, **dadurch gekennzeichnet, daß** die Entnahmevorrichtung (3) oder jede Entnahmevorrichtung (3) mit einem Sensor (37) ausgestattet ist, der den Leerraum erfaßt, der nach der Entnahme eines Gegenstands (11a) entsteht, und das Entkuppeln der Reiblaufrollen (23) und der Bänder (13) der Tabletts (2) auslöst und damit das Vorrücken der anderen Gegenstände der betreffenden Fächerreihe stoppt.

19. Anlage nach einem der Ansprüche 2 oder 8 bis 18, **dadurch gekennzeichnet, daß** die Entnahmevorrichtung (3) oder jede Entnahmevorrichtung (3) enthält:
- einerseits ein bewegliches Schubfach (21), das die Andrückrollen (23) trägt, die dazu bestimmt sind, an den vorderen Enden der Bänder (13) der Tabletts (2), den Schwungrädern (38) für den Drehantrieb der Andrückrollen (23) mittels Riemen (39) und den vorderen Riemenscheiben (46) zur Auflage zu kommen, um welche die Förderbänder (22) der Entnahmevorrichtung umlaufen, deren Obertrum (22a) über diesem Schubfach (21) zirkuliert, und
- andererseits Mittel, welche die Bewegungen zum Andocken und Zurückweichen des beweglichen Schubfachs (21) so sicherstellen, daß das letztere zwei Positionen einnehmen kann, entweder eine erste neutrale Position, in der sich die Andrückrollen (23) von den Enden der Bänder (13) der Tabletts (2) beabstandet befinden, oder eine zweite aktive Position, in der sich die Rollen (23) an die Enden der Bänder (13) der Tabletts (2) angedrückt befinden.

20. Anlage nach einem der Ansprüche 2 oder 8 bis 19, **dadurch gekennzeichnet, daß** die Entnahmevorrichtung (3) oder jede Entnahmevorrichtung (3) mit Mitteln (31) ausgestattet ist, die ein elastisches Aufliegen der Andrückrollen (23) an den vorderen Enden der Bänder (13) der Tabletts (2) sicherstellen.

21. Anlage nach den Ansprüchen 19 und 20, **dadurch gekennzeichnet, daß** die Mittel, welche die Bewegungen zum Andocken und Zurückweichen des beweglichen Schubfachs (21) sicherstellen, eine Motorwelle (24) umfassen, die mittels einer Rasteneinrichtung einen Zahnkranz (26), eine Bremse (28), die in der Nähe des Zahnkranzes montiert ist und deren Bremsschuh oder Bremsklotz (28a) auf dessen Umfang zur Auflage kommen kann, eine flexible Verbindung, wie beispielsweise ein Kabel (27), das an seinen gegenüberliegenden Enden zum einen an dem Zahnkranz (26) und zum anderen an einer Stange (30) befestigt ist, die gegen die Gegenwirkung einer Feder (31) axial beweglich ist, in einer Richtung antreibt, wobei dieses Kabel sich auf eine Scheibe (41) aufrollt, die von dem beweglichen Organ (40a) einer magnetischen Saugvorrichtung (40) getragen wird, wodurch es ermöglicht wird, die Scheibe (41) bei der Translation des beweglichen Schubfachs (21) fest zu verbinden.

22. Anlage nach Anspruch 21, **dadurch gekennzeichnet, daß** das mobile Organ (40a) der magnetischen Saugvorrichtung (40) der Wirkung einer Rückholfeder (42) unterworfen ist, die dazu tendiert, sie in die an dem beweglichen Schubfach (21) anliegende Position zurückzuholen.

23. Anlage nach einem der Ansprüche 10 bis 22, **dadurch gekennzeichnet, daß** der Drehantrieb der Andrückrollen (23) an den Förderbändern (22) mittels eines mehrstufigen Schwungrads (38) erreicht wird, auf dessen großem Durchmesser sich jedes Band (22) aufrollt, und eines Riemens (39), der sich einerseits auf den kleinen Durchmesser des mehrstufigen Schwungrads (38) und andererseits auf die Andrückrolle (23) aufrollt.

24. Anlage nach Anspruch 24, **dadurch gekennzeichnet, daß** die Entnahmevorrichtung (3) oder jede Entnahmevorrichtung (3) Kupplungssysteme umfaßt, die einen selektiven Antrieb jedes Förderbands (22) gestatten, wobei diese Kupplungssysteme eine Trommel (32) umfassen, auf die sich ein Förderband (232) aufrollt, wobei diese Trommel über ein epizykloidisches Getriebe in Drehung versetzt wird, das ein Motorritzel (34), Satellitenräder (35), einen Zwischenzahnkranz (33) und die Trommel (32) umfaßt, wobei der Zwischenzahnkranz (33) dieses epizykloidischen Getriebes mit peripheren Rasten (48) versehen ist, in die der bewegliche Riegel (36a) einer elektrischen Verriegelung (36) eingreifen kann.
